# EUROPEAN PATENT SPECIFICATION

(11) **EP 1 018 364 B1**
(45) Date of publication and mention of the grant of the patent: **25.06.2003**
(21) Application number: 99670001.9
(22) Date of filing: 06.01.1999
(51) Int. Cl.: B01J 13/04

(54) **Apparatus for the preparation of spherical polymer particles**
Vorrichtung zur Herstellung von kugelförmigen Polymerepartikeln
Dispositif de préparation de particles polymériques sphériques

(43) Date of publication of application: 12.07.2000
(73) Proprietor: TECNIMEDE-SOCIEDADE TECNICO-MEDICINAL, S.A., 2685-338 Prior Velho (PT)
(72) Inventor: De Sousa Goucha Jorge, Pedro Manuel, Dr., 2670-399 Loures (PT); Mendes Cerdeira, Ana Maria, Dr., 2700-098 Amadora (PT); Leitao Das Neves Almeida,Prof. Antonio José, 1990-175 LISBOA (PT)
(74) Representative: Ferreira, Maria Silvina

(56) References cited:
- EP-A- 0 513 563
- WO-A-93/22045
- FR-A- 2 190 524

## Description

### Sumary of the Invention

The present invention refers to an apparatus of preparing spherical particles (microspheres and beads) by precipitation of polymers, the operation of which can be easily transposed to an industrial scale.

### Background of the Invention

The dripping phenomenon has been described in several works as a way to obtain microspheres to be used in pharmaceutical formulations. The processes described in the literature for preparing beads or microspheres based on the ionotropic gelation phenomenon use the dripping of a solution or a suspension (Sugawara, S. and Otagiri, M. (1994) Pharm. Res., The controlled release of prednisolone using alginate gel, 11, 272-277). The dripping phenomenon has also been used to obtain hydroxypropyl methylcellulose phthalate matrices by precipitation in acidic media (Zaniboni et al. (1995) Production and characterisation of enteric beads Int. J. Pharm., 125, 151-155). Other dripping processes use the dripping of melted materials and the subsequent solidification of the droplets (Jedras, Z. and Janicki, s. (1988) A method of preparing mannitol or polyethylene glycol core pellets, Pharmazie, 43, 215-216).

However, all the above mentioned processes for preparing pharmaceutical formulations by the dripping phenomenon use a rudimentary equipment, such as disposable syringes. On the other hand, the use of stirrers inside a reaction vessel containing the precipitation solution renders the process very complex since it is necessary to assemble several pieces on several supports. Therefore, the variability of the produced batches is increased.

In this way, the use of a perfectly standardized apparatus, all the operating parameters of which can be suitably controlled, is essential to transpose any process based upon the dripping phenomenon to the industrial scale.

### Detailed Description of the Invention

The object of the present invention is a perfectly standardized apparatus of preparing beads and microspheres by the process of dripping a polymer solution and subsequent precipitation of the droplets in an insolubilizing medium.

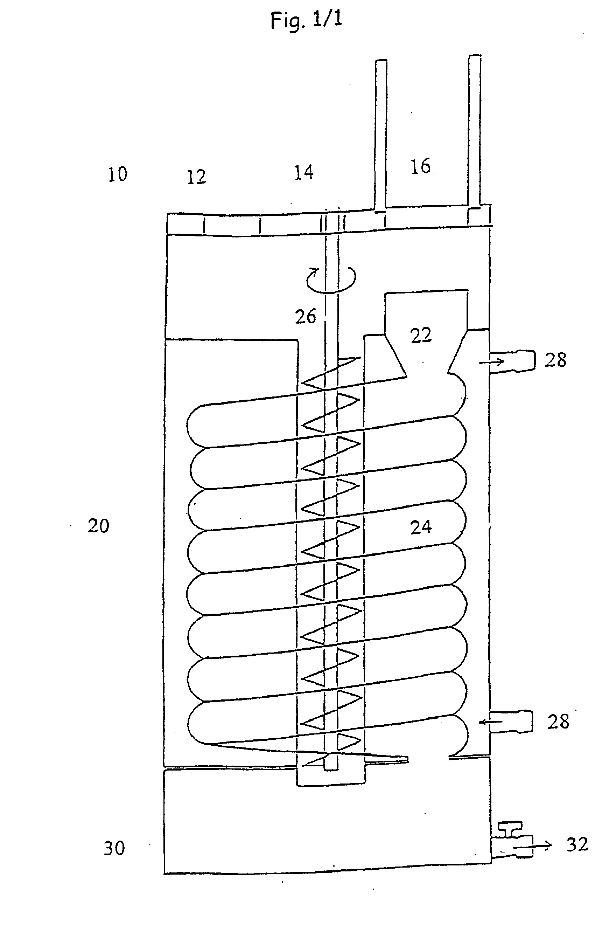

The enclosed Figure 1 is a schematic cross section view of the preferred embodiment of the apparatus according to this invention.

The apparatus essentially comprises three superposed parts.

The upper part of the apparatus, reference 10, is assembled on the outside of the top of intermediate part 20 and comprises three units, respectively: the unit 12, for monotoring the operation parameters such as temperature and pH; the unit 14, for driving and controlling the speed of rotation of a vertical shaft endless screw 26; and the unit 16, the bottom of which is the base of a level adjustable support where variable diameter tubes for dripping polymeric solution or a spray nozzle are suspended.

The droplets of polymer solution fall through the bottom of said unit 16.

The drawing only shows the position of the three units of the part 10 in order to achieve a better clarification.

The intermediate part of the apparatus, reference 20, is solidarized with the part 10 and comprises a funnel 22 containing the precipitating solution, placed under the hole of the unit 16 and connected to a coil 24 extending to the bottom of this part around a endless screw having a vertical shaft 26.

The purpose of this endless screw 26 is to keep the precipitating solution under rotation and impel it inwards; the microspheres are moved slowly in a descendent way inside the coil.

The wall of the part 20 has two cocks 28 for the recirculation of a thermostatization liquid, for instance water.

The lower part, reference 30, is a vessel provided with a discharge cock 32 to remove the liquids from the inside of the apparatus.

The association of the upper and intermediate parts 10 and 20, and the lower part 30 are joined together so that overflows of solution are avoided during the production process.

The use of the apparatus is illustrated by the following series of steps:
**a)** The precipitating solution is introduced inside the lower part 30 of the apparatus.
**b)** The apparatus is suitably sealed in order to avoid overflows and leakages through the connection of the part 20 and lower part 30.
**c)** The solution or the suspension containing the polymers is prepared.
**d)** The support 16 position is adjusted according to the wanted height of dripping.
**e)** The polymer solution or suspension is dripped through the dripping tubes by means of a (non shown) peristaltic pump or is added by a spray nozzle.
**f)** The polymer solution drops fall into the funnel 22 and are sucked in a descendent way through the coil 24 that is connected to the funnel 22 and is extended around the endless screw 26. The endless screw 26 is connected to a motor 14, promotes the precipitating solution recycling under the impelling action inwards, pulling the formed particles. The part 20 has two cocks 28 on the wall which promote the flow of a thermostatizing liquid. The thus formed particles fall into the lower part 30 of the apparatus where they are kept under agitation during the necessary period of time to have the strength for further handling.
**g)** The apparatus is opened at the junction jointing part 20 to lower part 30 and the formed beads or microspheres are collected.

As an alternative to the apparatus of Figure, the lower part 30 has two cocks so that the production can proceed continuously.

The operation of the thus built apparatus is illustrated by the following steps:
**a)** The precipitating liquid is charged inside the lower part 30 of the apparatus according to the invention.
**b)** The apparatus is suitably sealed in order to avoid solution overflows across the connection of the intermediate part 20 and the lower part 30.
**c)** A solution or a suspension containing the polymer or polymers is prepared.
**d)** The position of the support 16 is adjusted according to the wanted height of dripping.
**e)** The polymer solution or suspension is dripped through dripping tubes of a known diameter by means of a peristaltic pump (not shown) or is added through a nozzle with the aid of compressed air.
**f)** Under the support 16, a funnel 22 is placed, where the drops fall; these drops are sucked in a descendent way through the coil 24 that is connected to the funnel 22 and extends around the endless screw 26. The endless screw 26 is connected to a motor 14, promotes the precipitating solution recycling under the impelling action inwards and pulls the formed particles.

The coil 24 dimensions are adjusted in such a way that the time needed by the beads or microspheres to reach the lower part of the apparatus will be sufficient to have the necessary strength for further processing.

The part 20 has two cocks 28 which allow the flow of a thermostatizing liquid. The thus formed particles fall in to the lower part 30 of the apparatus. One of the cocks 32 of the lower part 30 of the apparatus is connected to a peristaltic pump that removes the precipitation solution from the inside of the apparatus.

A wire screen having suitable dimensions avoid the passage of the beads or microspheres. Washing liquid is added through the funnel 22 while the formed beads or microspheres are pulled from the inside of the apparatus and collected in a filter. When the precipitation solution is to be reused, it can be recycled to the inside of the apparatus through one of the cocks 32 of the lower part 30 of the apparatus and the process is repeated.

If the apparatus according the present invention is destined to be used in a pilot plant it is preferably made of a clear material, for instance glass; if it is destined to industrial plants, is made of a stronger material.

The following non limitative examples illustrate the operation and application of the apparatus.

### Example 1

### Hydroxypropyl methylcellulose phthalate beads

### 1.1 Preparation of the dripping solution

| | |
|---|---|
| NaHCO₃ | 2.0 g |
| HP₅₀ | 14.0 g |
| Deionized water | 84.0 g |

Sodium bicarbonate is solubilized in the deionized water. HP50 is added to the previous solution.

### 1.2 Preparation of the precipitating solution

| | |
|---|---|
| Citric acid | 100.0 g |
| Deionized water | 900.0 g |

### 1.3 Bead preparation using the apparatus of the invention

It is carried out by means of following steps:
**a)** 10% citric acid solution is introduced in the lower part 30 of the apparatus.
**b)** The velocity of the endless screw 26 is set to 500 rpm.
**c)** The HP₅₀ solution is dripped with a peristaltic pump through the tubes suspended in the support 16 and set at 20 cm from the liquid level on the funnel 22 of the apparatus.
**d)** The HP₅₀ droplets are immediately converted into spheres by precipitation after contacting the citric acid solution. The spheres are pulled in a descendent way through the coil by the movement of the citric acid solution due to the endless screw rotation, a rotation speed of 500 rpm being set on the motor 14 actuating the endless screw 26.
**e)** After dripping the HP₅₀ solution, the citric acid solution is collected through a cock 32 connected to the lower part 30 of the apparatus and to a peristaltic pump.
**f)** Distilled water is added through the funnel 22 and the beads are collected on a filter paper through the cock 32.

### Example 2

### Preparation of calcium alginate beads

### 2.1 Preparation of the dripping solution

| | |
|---|---|
| Sodium alginate | 1.0 g |
| Deionized water | 99.0 g |

Sodium alginate is added to the deionized water and a solution is obtained.

### 2.2 Preparation of the precipitation solution

| | |
|---|---|
| Calcium chloride | 10.0 g |
| Deionized water | 990.0 g |

### 2.3 Bead preparation using the apparatus of the invention.

**a)** 1% calcium chloride solution is introduced in the lower part 30 of the apparatus.
**b)** The rotation velocity of the endless screw 26 is set to 400 rpm.
**c)** The sodium alginate solution is dripped with a peristaltic pump through the tubes suspended in the support 16 set at 10 cm from the liquid level in the funnel 22 of the apparatus.
**d)** The sodium alginate droplets are immediately precipitated by ionotropic gelation as soon as they contact the calcium chloride solution. The spheres are pulled in descendent way through the coil by the movement of the calcium chloride solution due to the endless screw rotation. A rotation speed of 400 rpm is set on the motor 14 actuating the endless screw 26.
**e)** After dripping the sodium alginate solution, the calcium chloride solution is collected through to the cock 32 in connected to the lower part of the apparatus 30.
**f)** The beads are collected on a filter paper through the cock 32 and subsequently washed with distilled water.

## Claims

1. Apparatus for preparing beads or microspheres eventually containing a drug, **characterised in that** it comprises the following three superposed parts:
**a)** the upper part (10) assembled on the outside comprising a unit (12) for monitoring the operation parameters, a unit (14) for driving an endless screw (26) having a vertical shaft and a unit (16) for supporting the dripping tubes or a spray nozzle of a polymer solution eventually containing a drug:
**b)** the intermediate part (20), solidarized with the part (10), comprising a funnel (22) placed under the discharge hole of the unit (16) and connected to a coil (24) extending to the bottom of the intermediate part (20) around a vertical shaft endless screw (26), which can be thermostatized by the circulation of a liquid (water) through an exterior jacket having inlet and outlet holes (28); and
**c)** the lower part (30), which is a vessel for collecting and draining the liquids from the apparatus inside, through a discharge cock (32).

2. Apparatus according to claim 1, **characterised in that** it has two cocks (32) in its lower part (30), one of them being connected to a peristaltic pump to collect and introduce the precipitating solution from and to the inside of the apparatus.

3. Apparatus according to claim 1, **characterised in that** it comprises one coil (24), the length and diameter of which can be changed in order to control the time that the beads and microspheres need to reach the apparatus bottom (30).

## Patentansprüche

1. Vorrichtung zur Herstellung von Granulaten oder Mikrokugeln, die gegebenenfalls ein Arzneimittel enthalten, **dadurch gekennzeichnet, daß** sie aus folgenden drei über einander angeodneten Teilen besteht:
a) der obere Teil (10) an der Außenseite angeordnet, mit einer Maßeinheit (12) zur Überwachung der Betriebsparameter, eine Einheit (14) für den Antrieb einer Schnecke (26) mit Hochachse und eine Einheit (16) für das Stützen der Tropfrohre oder einer Sprühdüse einer Polymerlösung, die gegebenenfalls ein Arzneimittel enthält;
b) das Zwischenteil (20), welches an das Teil (10) angeschloßen ist, und das einen Trichter (22) enthält, der unterhalb der Ausmündung der Einheit (16) angeordnet und mit einer Spule (24) verbunden ist, die sich bis zur Unterseite des Zwischenteils (20) um eine hochachsiche Schnecke (26) verlängert und durch den Umlauf einer Flüssigkeit (Wasser) durch einen Außenmantel mit Ein- und Auslassbohrungen (28) thermostatiziert werden kann; und
c) das untere Teil (30), welches aus einem Behälter zum Sammeln und Ablassen der Flüssigkeiten aus dem Inneren der Vorrichtung durch einen Ablaßhahn (32) besteht.

2. Vorrichtung nach Anspruch 1, **dadurch gekennzeichnet, daß** sie zwei Hähne (32) in ihrem unteren Teil (30) besitzt, wovon einer an eine peristaltische Pumpe angeschlossen ist, um die von der Vorrichtung ausfallende Lösung zu sammeln und in diese einzuführen.

3. Vorrichtung nach Anspruch 1, **dadurch gekennzeichnet, daß** sie eine Spule (24) enthält, deren Länge und Durchmesser geändert werden kann, um die Zeit zu steuern, die die Granulate und Mikrokugeln benötigen, um die Unterseite der Vorrichtung (30) zu erreichen.

## Revendications

1. Appareil pour préparer des granules ou des micro sphères contenant éventuellement une drogue, **caractérisé** parce qu'il comporte les trois parties superposées suivantes
a) la partie supérieure (10) assemblée à l'extérieur, comporte une unité (12) pour surveiller les paramètres de fonctionnement, une unité (14) pour actionner une vis sans fin (26) ayant un axe vertical et une unité (16) pour soutenir les tubes d'égouttement ou un bec de pulvérisation d'une solution de polymère contenant éventuellement une drogue;
b) la partie intermédiaire (20), solidairement accouplée à la partie (10), comportant un entonnoir (22) placé sous l'orifice de décharge de l'unité (16) et relié à un enroulement (24) qui se prolonge au fond de la partie intermédiaire (20) autour d'une vis sans fin d'axe vertical (26), qui peut être thermostatisé par circulation d'un liquide (l'eau) par une veste extérieure ayant orifices d'admission et de décharge (28); et
c) la partie plus inférieure (30), qui est un récipient pour rassembler et évacuer les liquides de l'intérieur de l'appareil, par un robinet de décharge (32)

2. Appareil selon la revendication 1, **caractérisé en ce qu'**il a deux robinets (32) dans sa partie inférieure (30), un d'eux étant relié à une pompe péristaltique pour rassembler et présenter la solution de précipitation de l'appareil à l'intérieur du même.

3. Appareil selon la revendication 1, **caractérisé en ce qu'**il comporte un enroulement (24), dont le longueur et diamètre peuvent être changés afin de commander le temps dont les perles et les micro sphères ont besoin pour atteindre le fond d'appareil (30).
